# EUROPÄISCHE PATENTANMELDUNG

(11) **EP 4 345 182 A2**
(43) Veröffentlichungstag der Anmeldung: **03.04.2024**
(21) Anmeldenummer: 24157070.4
(22) Anmeldetag: 15.03.2022
(51) Int. Cl.: C22C 5/08

(54) **LOTLEGIERUNG, LÖTPASTE UND LÖTFOLIE MIT EINER SOLCHEN LOTLEGIERUNG**

(30) Priorität: 18.03.2021 DE 102021202673
(62) Teilanmeldung aus: 22715981.1
(71) Anmelder: MAPAL Fabrik für Präzisionswerkzeuge Dr. Kress KG, 73431 Aalen (DE)
(72) Erfinder: Kommer, Martin, 73460 Hüttlingen (DE); Baumann, Wolfgang, 73485 Unterschneidheim-Zipplingen (DE)
(74) Vertreter: Schrell, Andreas

(57) **Zusammenfassung**

Die Erfindung betrifft eine Lotlegierung, umfassend
- einen Massenanteil von mindestens 35 % bis höchstens 62 % an Silber,
- einen Massenanteil von mindestens 10 % bis höchstens 30 % an Kupfer,
- einen Massenanteil von mindestens 10 % bis höchstens 26 % an Zink, wobei
- die restlichen Massenanteile auf 100 % bis auf unvermeidbare Verunreinigungen mindestens ein Element aufweisen, das ausgewählt ist aus einer Gruppe, bestehend aus Zinn, Gallium, Mangan, Nickel, und Indium.

## Beschreibung

Die Erfindung betrifft eine Lotlegierung, eine Lötpaste mit einer solchen Lotlegierung und eine Lötfolie mit einer solchen Lotlegierung.

Beim Hartlöten werden aufgrund entsprechend hoher Schmelzpunkte der verwendeten Lotlegierungen typischerweise Temperaturen von über 650 °C erreicht. Hohe Temperaturen sind dabei insbesondere nötig, um eine ausreichende Scherfestigkeit der entstehenden Lötverbindung zu gewährleisten. Solch hohe Temperaturen sind jedoch für bestimmte Materialien ungünstig. Insbesondere ist für den Werkzeugbereich ungünstig, dass polykristalliner Diamant (PKD) bei solch hohen Temperaturen leidet oder beschädigt wird.

Der Erfindung liegt daher die Aufgabe zugrunde, eine Lotlegierung, eine Lötpaste mit einer solchen Lotlegierung und eine Lötfolie mit einer solchen Lotlegierung zu schaffen, wobei die genannten Nachteile reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem eine Lotlegierung geschaffen wird, wobei die Lotlegierung umfasst:
- einen Massenanteil von mindestens 35 % bis höchstens 62 % an Silber,
- einen Massenanteil von mindestens 10 % bis höchstens 30 % an Kupfer,
- einen Massenanteil von mindestens 10 % bis höchstens 26 % an Zink, und wobei
- die restlichen Massenanteile auf 100 % bis auf unvermeidbare Verunreinigungen mindestens ein Element aufweisen, das ausgewählt ist aus einer Gruppe, bestehend aus Zinn, Gallium, Mangan, Nickel, und Indium.

Die Lotlegierung weist vorteilhaft eine vergleichsweise niedrige Schmelztemperatur, insbesondere im Bereich von 545 °C bis höchstens 620 °C auf, und kann daher bei vergleichsweise niedrigen Löttemperaturen, insbesondere von 560 °C bis höchstens 650 °C, angewendet werden. Somit können auch temperaturempfindliche Materialien wie beispielsweise PKD mit der Lotlegierung ohne Gefahr einer Beschädigung verlötet werden. Dabei werden gleichwohl hohe Scherfestigkeiten erreicht, insbesondere von mehr als 1.500 Newton bzw. mehr als 110 MPa, vorzugweise von bis zu 315 MPa.

In bevorzugter Ausgestaltung sind die im Kontext der vorliegenden technischen Lehre genannten Massenanteile an Silber nasschemisch bestimmt, insbesondere durch Fällungstitration, insbesondere gemäß der Norm ISO 11427:2014 in der an dem den Zeitrang des vorliegenden Schutzrechts bestimmenden Tag geltenden Fassung.

In bevorzugter Ausgestaltung sind die Massenanteile der übrigen Elemente im Kontext der vorliegenden technischen Lehre mittels optischer Emissionsspektrometrie mit induktiv gekoppeltem Plasma (ICP-OES) bestimmt, insbesondere gemäß der Norm SOP 2-EM-551 2018-03 in der an dem den Zeitrang des vorliegenden Schutzrechts bestimmenden Tag geltenden Fassung.

Insbesondere ist die hier vorgeschlagene Lotlegierung frei von Kadmium. Die Lotlegierung ist also insbesondere eine Cd-freie Lotlegierung.

Insbesondere ist die hier vorgeschlagene Lotlegierung eine silberbasierte Lotlegierung. Die Lotlegierung ist also insbesondere eine Ag-basis-Lotlegierung.

Insbesondere ist die hier vorgeschlagene Lotlegierung eine Ag-basis, Cd-freie Lotlegierung.

Insbesondere ist die hier vorgeschlagene Lotlegierung vielseitig einsetzbar, insbesondere zum Verbinden von Teilen verschiedenster Materialzusammensetzungen.

Vorzugsweise beträgt der Massenanteil an Kupfer von mindestens 11 % bis höchstens 26 %.

Gemäß einer Weiterbildung der Erfindung ist vorgesehen, dass der Massenanteil an Silber von mindestens 40 % bis höchstens 60 %, vorzugsweise von mindestens 50 % bis höchstens 60 %, und der Massenanteil an Kupfer von mindestens 13 % bis höchstens 22 %, vorzugsweise von mindestens 15 % bis höchstens 21 % beträgt. Insbesondere in diesen Bereichen verwirklichen sich die bereits zuvor genannten Vorteile. Vorzugsweise beträgt der Massenanteil an Silber von mindestens 42 % bis höchstens 58,5 %, vorzugsweise von mindestens 54,5 % bis höchstens 58 %, vorzugsweise bis höchstens 57,5 %, vorzugsweise bis höchstens 57 %.

Gemäß einer Weiterbildung der Erfindung ist vorgesehen, dass die Lotlegierung einen Massenanteil von mindestens 4 % bis höchstens 17 %, vorzugsweise von mindestens 5 % bis höchstens 16 %, an Zinn aufweist. Vorzugsweise beträgt der Massenanteil an Zinn von mindestens 6 % bis höchstens 14 %, vorzugsweise bis höchstens 13,5 %. Dabei verwirklichen sich in besonderer Weise die bereits genannten Vorteile.

Gemäß einer Weiterbildung der Erfindung ist vorgesehen, dass die Lotlegierung einen Massenanteil von mindestens 0,1 % bis höchstens 10 %, vorzugsweise von mindestens 3 % bis höchstens 7 %, vorzugsweise von mindestens 4 % bis höchstens 6 %, vorzugsweise von mindestens 4,3 % bis höchstens 5,5 %, vorzugsweise bis höchstens 5 %, an Gallium aufweist. Dabei verwirklichen sich in besonderer Weise die bereits genannten Vorteile.

Gemäß einer Weiterbildung der Erfindung ist vorgesehen, dass die Lotlegierung einen Massenanteil von mindestens 0,1 % bis höchstens 16 %, vorzugsweise von mindestens 2 % bis höchstens 15 %, an Indium aufweist. In den hier genannten Bereichen verwirklichen sich in besonderer Weise die bereits genannten Vorteile. Vorzugsweise beträgt der Massenanteil an Indium von mindestens 2,3 % bis höchstens 14 %, vorzugsweise von mindestens 3 % bis höchstens 12 %, vorzugsweise bis höchstens 9 %, vorzugsweise bis höchstens 5 %, vorzugsweise von mindestens 3,3 % bis höchstens 4,5 %. Alternativ beträgt der Massenanteil an Indium vorzugsweise von mindestens 6 % bis höchstens 16 %, vorzugsweise von mindestens 8 % bis höchstens 14 %, vorzugsweise von mindestens 9 % bis höchstens 12 %, vorzugsweise von mindestens 9,7 % bis höchstens 11%, vorzugsweise bis höchstens 10,5 %.

Gemäß einer Weiterbildung der Erfindung ist vorgesehen, dass die Lotlegierung einen Massenanteil von mindestens 4 % bis höchstens 17 %, vorzugsweise von mindestens 5 % bis höchstens 16 %, vorzugsweise von mindestens 7 % bis höchstens 15 %, vorzugsweise von mindestens 8 % bis höchstens 14 %, vorzugsweise von mindestens 9 % bis höchstens 13,7 %, vorzugsweise von mindestens 9,5 % bis höchstens 13,5 %, an Zinn aufweist, wobei der Massenanteil an Zinn vorzugsweise von mindestens 10 % bis höchstens 13 %, vorzugsweise von mindestens 10,5 % bis höchstens 12,7 %, vorzugsweise von mindestens 11 % bis höchstens 12,5 %, vorzugsweise von mindestens 11,5 % bis höchstens 12 %, vorzugsweise 11,7 % beträgt. In diesen Bereichen verwirklichen sich in besonderer Weise die bereits genannten Vorteile.

Insbesondere erweist sich die Lotlegierung als sehr gut zu walzen, wobei sie zugleich wenig spröde ist und eine sehr hohe Scherfestigkeit aufweist. Vorzugsweise beträgt der Massenanteil an Silber von mindestens 51 % bis höchstens 62 %, vorzugsweise von mindestens 54 % bis höchstens 60 %. Vorzugsweise beträgt der Massenanteil an Kupfer von mindestens 13,5 % bis höchstens 20 %, vorzugsweise von mindestens 15 % bis höchstens 19 %. Vorzugsweise beträgt der Massenanteil an Zink von mindestens 9 % bis höchstens 19 %, vorzugsweise von mindestens 11,5 % bis höchstens 15,5 %. Vorzugsweise ist die Lotlegierung frei von Gallium. Alternativ oder zusätzlich ist die Lotlegierung bevorzugt frei von Mangan. Alternativ oder zusätzlich ist die Lotlegierung bevorzugt frei von Nickel. Alternativ oder zusätzlich ist die Lotlegierung bevorzugt frei von Indium.

Die Formulierung "frei von" bedeutet im Kontext der vorliegenden technischen Lehre insbesondere, dass das derart bezeichnete Element höchstens in Spuren vorkommt, vorzugsweise nicht nachweisbar ist und/oder unterhalb der Nachweisgrenze liegt. Vorzugsweise beträgt der aufsummierte Massenanteil der in Spuren vorkommenden Elemente und Verunreinigungen höchstens 0,15 %, vorzugsweise höchstens 0,1 %. Vorzugsweise ist der aufsummierte Massenanteil der in Spuren vorkommenden Elemente und Verunreinigungen kleiner als 0,15 %, vorzugsweise kleiner als 0,1 %. Vorzugsweise beträgt der Massenanteil eines in Spuren vorkommenden Elements oder einer Verunreinigung höchstens 0,04 %, vorzugsweise höchstens 0,035 %, vorzugsweise höchstens 0,01 %, vorzugsweise höchstens 0,008 %. Vorzugsweise ist der Massenanteil eines in Spuren vorkommenden Elements oder einer Verunreinigung kleiner als 0,01 %, vorzugsweise kleiner als 0,008 %, Vorzugweise kleiner als 0,005 %, vorzugsweise kleiner als 0,002 %, vorzugweise kleiner als 0,001 %.

Gemäß einer Weiterbildung der Erfindung ist vorgesehen, dass der Massenanteil an Kupfer von mindestens 13 % bis höchstens 19 %, vorzugsweise von mindestens 14 % bis höchstens 18,7 %, vorzugsweise von mindestens 17 % bis höchstens 18,5 % beträgt, wobei die Lotlegierung einen Massenanteil an Zinn von mindestens 6 % bis höchstens 17 %, vorzugsweise von mindestens 7 % bis höchstens 15 %, vorzugsweise von mindestens 9 % bis höchstens 13 % aufweist. Vorzugsweise beträgt der Massenanteil an Silber von mindestens 51 % bis höchstens 62 %. Vorzugsweise beträgt der Massenanteil an Zink von mindestens 9 % bis höchstens 20 %. Vorzugsweise ist die Lotlegierung frei von Gallium. Alternativ oder zusätzlich ist die Lotlegierung bevorzugt frei von Mangan. Alternativ oder zusätzlich ist die Lotlegierung bevorzugt frei von Nickel. Alternativ oder zusätzlich ist die Lotlegierung bevorzugt frei von Indium.

Gemäß einer Weiterbildung der Erfindung ist vorgesehen, dass die Lotlegierung einen Massenanteil von mindestens 5 % bis höchstens 12 %, vorzugsweise von mindestens 5,5 % bis höchstens 8 %, vorzugsweise von mindestens 6 % bis höchstens 7 %, vorzugsweise von mindestens 6,3 % bis höchstens 6,7 % an Zinn, und einen Massenanteil von mindestens 2 % bis höchstens 9 %, vorzugsweise von mindestens 2,5 % bis höchstens 6 %, vorzugsweise von mindestens 3 % bis höchstens 5 %, vorzugsweise von mindestens 3,5 % bis höchstens 4,5 %, vorzugsweise von mindestens 3,7 % bis höchstens 4,3 %, an Indium aufweist. In diesen Bereichen verwirklichen sich in besonderer Weise die zuvor genannten Vorteile. Insbesondere erweist sich die Lotlegierung als gut zu walzen, wobei sie zugleich eine sehr hohe Scherfestigkeit aufweist. Vorzugsweise beträgt der Massenanteil an Silber von mindestens 52 % bis höchstens 62 %. Vorzugsweise beträgt der Massenanteil an Kupfer von mindestens 13 % bis höchstens 23 %. Vorzugsweise beträgt der Massenanteil an Zink von mindestens 9 % bis höchstens 19 %. Vorzugsweise ist die Lotlegierung frei von Gallium. Alternativ oder zusätzlich ist die Lotlegierung bevorzugt frei von Mangan. Alternativ oder zusätzlich ist die Lotlegierung bevorzugt frei von Nickel.

Gemäß einer Weiterbildung der Erfindung ist vorgesehen, dass der Massenanteil an Zink kleiner ist als 19 %, vorzugsweise kleiner als 15 %, wobei die Legierungen einem Massenanteil an Zinn aufweist, der größer ist als 5 %, vorzugsweise größer als 6 %, und bis höchstens 7 % beträgt, wobei die Legierung einen Massenanteil an Indium aufweist, der von mindestens 2,3 % bis höchstens 9 %, vorzugsweise von mindestens 3 % bis höchstens 4,5 % beträgt. In diesen Bereichen verwirklichen sich in besonderer Weise die zuvor genannten Vorteile. Vorzugsweise beträgt der Massenanteil an Silber von mindestens 52 % bis höchstens 62 %. Vorzugsweise beträgt der Massenanteil an Kupfer von mindestens 13 % bis höchstens 23 %. Vorzugsweise beträgt der Massenanteil an Zink von mindestens 9 % bis höchstens 19 %. Vorzugsweise ist die Lotlegierung frei von Gallium. Alternativ oder zusätzlich ist die Lotlegierung bevorzugt frei von Mangan. Alternativ oder zusätzlich ist die Lotlegierung bevorzugt frei von Nickel.

Gemäß einer Weiterbildung der Erfindung ist vorgesehen, dass die Lotlegierung einen Massenanteil von mindestens 6 % bis höchstens 16 %, vorzugsweise von mindestens 9 % bis höchstens 11 %, vorzugsweise von mindestens 9,7 % bis höchstens 10,7 %, vorzugsweise von mindestens 10 % bis höchstens 10,5 %, an Indium aufweist. In diesen Bereichen verwirklichen sich in besonderer Weise die zuvor genannten Vorteile. Insbesondere weist diese Lotlegierung eine besonders hohe Scherfestigkeit auf. Vorzugsweise beträgt der Massenanteil an Silber von mindestens 37 % bis höchstens 47 %. Vorzugsweise beträgt der Massenanteil an Kupfer von mindestens 11 % bis höchstens 21 %. Vorzugsweise beträgt der Massenanteil an Zink von mindestens 18 % bis höchstens 28 %. Vorzugsweise ist die Lotlegierung frei von Gallium.

Gemäß einer Weiterbildung der Erfindung ist vorgesehen, dass die Lotlegierung einen Massenanteil von mindestens 0,1 % bis höchstens 10 %, vorzugsweise von mindestens 2 % bis höchstens 6 %, vorzugsweise von mindestens 3 % bis höchstens 5 %, vorzugsweise von mindestens 3,5 % bis höchstens 4,5 %, vorzugsweise von mindestens 3,7 % bis höchstens 4,3 %, an Mangan aufweist. In diesen Bereichen verwirklichen sich in besonderer Weise die zuvor genannten Vorteile. Vorzugsweise beträgt der Massenanteil an Silber von mindestens 37 % bis höchstens 47 %. Vorzugsweise beträgt der Massenanteil an Kupfer von mindestens 11 % bis höchstens 21 %. Vorzugsweise beträgt der Massenanteil an Zink von mindestens 18 % bis höchstens 28 %. Vorzugsweise beträgt der Massenanteil an Indium von mindestens 6 % bis höchstens 16 %. Vorzugsweise ist die Lotlegierung frei von Gallium.

Gemäß einer Weiterbildung der Erfindung ist vorgesehen, dass die Lotlegierung einen Massenanteil von mindestens 0,1 % bis höchstens 9 % von mindestens 3 % bis höchstens 5 %, vorzugsweise von mindestens 3,7 % bis höchstens 4,7 %, vorzugsweise von mindestens 4,0 % bis höchstens 4,5 %, vorzugsweise von mindestens 4,3 % bis höchstens 4,5 %, an Nickel aufweist. In diesen Bereichen verwirklichen sich in besonderer Weise die zuvor genannten Vorteile. Vorzugsweise beträgt der Massenanteil an Silber von mindestens 37 % bis höchstens 47 %. Vorzugsweise beträgt der Massenanteil an Kupfer von mindestens 11 % bis höchstens 21 %. Vorzugsweise beträgt der Massenanteil an Zink von mindestens 18 % bis höchstens 28 %. Vorzugsweise beträgt der Massenanteil an Indium von mindestens 6 % bis höchstens 16 %. Vorzugsweise beträgt der Massenanteil an Mangan von mindestens 0,1 % bis höchstens 10 %. Vorzugsweise ist die Lotlegierung frei von Gallium.

Gemäß einer Weiterbildung der Erfindung ist vorgesehen, dass die Lotlegierung einen Massenanteil an Mangan aufweist, der größer ist als 3 % und höchstens 5 % beträgt, wobei die Lotlegierung einen Massenanteil an Indium aufweist, der größer ist als 7 % und höchstens 13 % beträgt, wobei die Lotlegierung einen Massenanteil von mindestens 3,5 % bis höchstens 5,5 % an Nickel aufweist. Vorzugsweise beträgt der Massenanteil an Silber von mindestens 37 % bis höchstens 47 %. Vorzugsweise beträgt der Massenanteil an Kupfer von mindestens 11 % bis höchstens 21 %. Vorzugsweise beträgt der Massenanteil an Zink von mindestens 18 % bis höchstens 28 %. Vorzugsweise ist die Lotlegierung frei von Gallium.

Im Folgenden werden spezifische bevorzugte Ausführungsbeispiele von Lotlegierungen beschrieben:

### [LEGIERUNG 1-1]

Es wird insbesondere ein erstes Ausführungsbeispiel der Lotlegierung bevorzugt, bei dem die Lotlegierung folgende Zusammensetzung - in Massenanteilen - aufweist:
- von mindestens 52 % bis höchstens 62 % Silber,
- von mindestens 13 % bis höchstens 23 % Kupfer,
- von mindestens 9 % bis höchstens 19 % Zink,
- von mindestens 7 %, bis höchstens 17 % Zinn,
- restliche Massenanteile bis 100 %: unvermeidbare Verunreinigungen.

### [LEGIERUNG 1-2]

Es wird insbesondere ein zweites Ausführungsbeispiel der Lotlegierung bevorzugt, bei dem die Lotlegierung folgende Zusammensetzung - in Massenanteilen - aufweist:
- von mindestens 54,7 % bis höchstens 58,7 % Silber,
- von mindestens 15,7 % bis höchstens 19,7 % Kupfer,
- von mindestens 11,5 % bis höchstens 15,5 % Zink,
- von mindestens 9,5 %, bis höchstens 13,5 % Zinn,
- restliche Massenanteile bis 100 %: unvermeidbare Verunreinigungen.

### [LEGIERUNG 1-3]

Es wird insbesondere ein drittes Ausführungsbeispiel der Lotlegierung bevorzugt, bei dem die Lotlegierung folgende Zusammensetzung - in Massenanteilen - aufweist:
- von mindestens 55,7 % bis höchstens 57,7 % Silber,
- von mindestens 16,7 % bis höchstens 18,7 % Kupfer,
- von mindestens 12,5 % bis höchstens 14,5 % Zink,
- von mindestens 10,5 %, bis höchstens 12,5 % Zinn,
- restliche Massenanteile bis 100 %: unvermeidbare Verunreinigungen.

### [LEGIERUNG 1-4]

Es wird insbesondere ein viertes Ausführungsbeispiel der Lotlegierung bevorzugt, bei dem die Lotlegierung folgende Zusammensetzung - in Massenanteilen - aufweist:
- 56,7 % Silber,
- 17,7 % Kupfer,
- 13,5 % Zink,
- 11,5 % Zinn,
- restliche Massenanteile bis 100 %: unvermeidbare Verunreinigungen.

### [LEGIERUNG 2-1]

Es wird insbesondere ein fünftes Ausführungsbeispiel der Lotlegierung bevorzugt, bei dem die Lotlegierung folgende Zusammensetzung - in Massenanteilen - aufweist:
- von mindestens 51 % bis höchstens 61 % Silber,
- von mindestens 13 % bis höchstens 23 % Kupfer,
- von mindestens 10 % bis höchstens 20 % Zink,
- von mindestens 1 % bis höchstens 11 % Zinn,
- von mindestens 1 % bis höchstens 9 % Indium,
- restliche Massenanteile bis 100 %: unvermeidbare Verunreinigungen.

### [LEGIERUNG 2-2]

Es wird insbesondere ein sechstes Ausführungsbeispiel der Lotlegierung bevorzugt, bei dem die Lotlegierung folgende Zusammensetzung - in Massenanteilen - aufweist:
- von mindestens 54,3 % bis höchstens 58,3 % Silber,
- von mindestens 16,3 % bis höchstens 20,3 % Kupfer,
- von mindestens 12,5 % bis höchstens 16,5 % Zink,
- von mindestens 4,3 % bis höchstens 8,3 % Zinn,
- von mindestens 2 % bis höchstens 6 % Indium,
- restliche Massenanteile bis 100 %: unvermeidbare Verunreinigungen.

### [LEGIERUNG 2-3]

Es wird insbesondere ein siebtes Ausführungsbeispiel der Lotlegierung bevorzugt, bei dem die Lotlegierung folgende Zusammensetzung - in Massenanteilen - aufweist:
- von mindestens 55,3 % bis höchstens 57,3 % Silber,
- von mindestens 17,3 % bis höchstens 19,3 % Kupfer,
- von mindestens 13,5 % bis höchstens 15,5 % Zink,
- von mindestens 5,3 % bis höchstens 7,3 % Zinn,
- von mindestens 3 % bis höchstens 5 % Indium,
- restliche Massenanteile bis 100 %: unvermeidbare Verunreinigungen.

### [LEGIERUNG 2-4]

Es wird insbesondere ein achtes Ausführungsbeispiel der Lotlegierung bevorzugt, bei dem die Lotlegierung folgende Zusammensetzung - in Massenanteilen - aufweist:
- 56,3 % Silber,
- 18,2 % Kupfer,
- 14,6 % Zink,
- 6,4 % Zinn,
- 4,1 % Indium,
- restliche Massenanteile bis 100 %: unvermeidbare Verunreinigungen.

### [LEGIERUNG 3-1]

Es wird insbesondere ein neuntes Ausführungsbeispiel der Lotlegierung bevorzugt, bei dem die Lotlegierung folgende Zusammensetzung - in Massenanteilen - aufweist:
- von mindestens 38 % bis höchstens 48 % Silber,
- von mindestens 12 % bis höchstens 21 % Kupfer,
- von mindestens 18 % bis höchstens 28 % Zink,
- von mindestens 0,1 % bis höchstens 9 % Mangan,
- von mindestens 0,1 % bis höchstens 9,3 % Nickel,
- von mindestens 5 % bis höchstens 15 % Indium,
- restliche Massenanteile bis 100 %: unvermeidbare Verunreinigungen.

### [LEGIERUNG 3-2]

Es wird insbesondere ein zehntes Ausführungsbeispiel der Lotlegierung bevorzugt, bei dem die Lotlegierung folgende Zusammensetzung - in Massenanteilen - aufweist:
- von mindestens 40,7 % bis höchstens 44,7 % Silber,
- von mindestens 13,5 % bis höchstens 17,5 % Kupfer,
- von mindestens 20,7 % bis höchstens 24,7 % Zink,
- von mindestens 2 % bis höchstens 6 % Mangan,
- von mindestens 2,3 % bis höchstens 6,3 % Nickel,
- von mindestens 8,3 % bis höchstens 12,3 % Indium,
- restliche Massenanteile bis 100 %: unvermeidbare Verunreinigungen.

### [LEGIERUNG 3-3]

Es wird insbesondere ein elftes Ausführungsbeispiel der Lotlegierung bevorzugt, bei dem die Lotlegierung folgende Zusammensetzung - in Massenanteilen - aufweist:
- von mindestens 41,7 % bis höchstens 43,7 % Silber,
- von mindestens 14,5 % bis höchstens 16,5 % Kupfer,
- von mindestens 21,7 % bis höchstens 23,7 % Zink,
- von mindestens 3 % bis höchstens 5 % Mangan,
- von mindestens 3,3 % bis höchstens 5,3 % Nickel,
- von mindestens 9,3 % bis höchstens 11,3 % Indium,
- restliche Massenanteile bis 100 %: unvermeidbare Verunreinigungen.

### [LEGIERUNG 3-4]

Es wird insbesondere ein zwölftes Ausführungsbeispiel der Lotlegierung bevorzugt, bei dem die Lotlegierung folgende Zusammensetzung - in Massenanteilen - aufweist:
- 42,8 % Silber,
- 15,5 % Kupfer,
- 22,8 % Zink,
- 4,0 % Mangan,
- 4,4 % Nickel,
- 10,4 % Indium,
- restliche Massenanteile bis 100 %: unvermeidbare Verunreinigungen.

### [Versuchsergebnisse]

Im Folgenden werden Versuchsergebnisse für spezifische bevorzugte Ausführungsbeispiele von Lotlegierungen beschrieben:

### [LEGIERUNG T1]

Es wird insbesondere ein dreizehntes Ausführungsbeispiel der Lotlegierung bevorzugt, bei dem die Lotlegierung folgende Zusammensetzung - in Massenanteilen - aufweist:
- 57 % Silber,
- 18 % Kupfer,
- 14 % Zink,
- 12 % Zinn,
- restliche Massenanteile bis 100 %: unvermeidbare Verunreinigungen.

Für dieses dreizehnte Ausführungsbeispiel der Lotlegierung konnte ein Schmelzbereich von 565 °C bis 610 °C ermittelt werden. Ein Löttemperaturbereich konnte von 575 °C bis 605 °C spezifiziert werden. Für eine Lötverbindung mit der Lotlegierung wurde eine durchschnittliche Scherfestigkeit von 176 MPa ermittelt.

### [LEGIERUNG T2]

Es wird insbesondere ein vierzehntes Ausführungsbeispiel der Lotlegierung bevorzugt, bei dem die Lotlegierung folgende Zusammensetzung - in Massenanteilen - aufweist:
- 56 % Silber,
- 18 % Kupfer,
- 15 % Zink,
- 6 % Zinn,
- 4 % Indium,
- restliche Massenanteile bis 100 %: unvermeidbare Verunreinigungen.

Für dieses vierzehnte Ausführungsbeispiel der Lotlegierung konnte ein Schmelzbereich von 590 °C bis 615 °C ermittelt werden. Ein Löttemperaturbereich konnte von 605 °C bis 630 °C spezifiziert werden. Für eine Lötverbindung mit der Lotlegierung wurde eine durchschnittliche Scherfestigkeit von 190 MPa ermittelt.

### [LEGIERUNG T3]

Es wird insbesondere ein fünfzehntes Ausführungsbeispiel der Lotlegierung bevorzugt, bei dem die Lotlegierung folgende Zusammensetzung - in Massenanteilen - aufweist:
- 43 % Silber,
- 16 % Kupfer,
- 23 % Zink,
- 4 % Mangan,
- 4,5 % Nickel,
- 10,5 % Indium,
- restliche Massenanteile bis 100 %: unvermeidbare Verunreinigungen.

Für dieses fünfzehnte Ausführungsbeispiel der Lotlegierung konnte ein Schmelzbereich von 590 °C bis 615 °C ermittelt werden. Ein Löttemperaturbereich konnte von 615 °C bis 640 °C spezifiziert werden. Für eine Lötverbindung mit der Lotlegierung wurde eine durchschnittliche Scherfestigkeit von 251 MPa ermittelt.

Die Aufgabe wird auch gelöst, indem eine Lötpaste geschaffen wird, die eine erfindungsgemäße Lotlegierung oder eine Lotlegierung nach einem oder mehreren der zuvor beschriebenen Ausführungsbeispiele aufweist. In Zusammenhang mit der Lötpaste ergeben sich insbesondere die Vorteile, die bereits in Zusammenhang mit der Lotlegierung beschrieben wurden.

Die Lötpaste weist bevorzugt zusätzlich zu der Lotlegierung ein Flussmittel, insbesondere Hartlotflussmittel, oder einen Binder auf. Diese Zusatzstoffe beeinflussen die Schmelztemperatur der Lotlegierung und damit im Ergebnis auch der Lötpaste nicht, sondern verdampfen vielmehr beim Löten. Geeignete Flussmittel oder Binder sind für sich genommen bekannt, sodass hierauf nicht weiter im Detail eingegangen wird. Als geeignete Flussmittel kommen allerdings beispielsweise infrage: Ein Flussmittel gemäß DIN EN 1045:1997-08 in der Fassung vom 8. August 1997, Flussmittel FH 10 bis 12, insbesondere 181 PF Atmosin der Castolin GmbH in der an dem den Zeitrang des vorliegenden Schutzrechts bestimmenden Tag erhältlichen Zusammensetzung, 1802 PF Atmosin der Castolin GmbH in der an dem den Zeitrang des vorliegenden Schutzrechts bestimmenden Tag erhältlichen Zusammensetzung, oder BrazeTec h 285 der SAXONIA Technical Materials GmbH in der an dem den Zeitrang des vorliegenden Schutzrechts bestimmenden Tag erhältlichen Zusammensetzung.

Die Aufgabe wird schließlich auch gelöst, indem eine Lötfolie geschaffen wird, die eine erfindungsgemäße Lotlegierung oder eine Lotlegierung nach einem oder mehreren der zuvor beschriebenen Ausführungsbeispiele aufweist. In Zusammenhang mit der Lötfolie ergeben sich insbesondere die Vorteile, die bereits in Zusammenhang mit der Lotlegierung beschrieben wurden. Insbesondere besteht die Lötfolie bevorzugt aus der Lotlegierung. Insbesondere ist die Lötfolie bevorzugt eine dünn ausgewalzte Folie, die aus der Lotlegierung besteht.

In bevorzugter Ausgestaltung weist die Lötfolie eine Dicke von mindestens 0,1 mm bis höchstens 0,3 mm, vorzugsweise 0,2 mm auf. Alternativ oder zusätzlich weist die Lötfolie bevorzugt eine Breite von mindestens 0,5 cm bis höchstens 15 cm, vorzugsweise von mindestens 1 cm bis höchstens 10 cm, vorzugsweise von mindestens 2 cm bis höchstens 8 cm, vorzugsweise von mindestens 4 cm bis höchstens 6 cm, vorzugsweise 5 cm, auf.

Die Erfindung wird im Folgenden anhand der Zeichnung näher beschrieben. Dabei zeigen:
- Figur 1: eine schematische Darstellung einer Darreichungsform eines Ausführungsbeispiels einer Lötpaste, und
- Figur 2: eine schematische Darstellung einer Darreichungsform eines Ausführungsbeispiels einer Lötfolie.

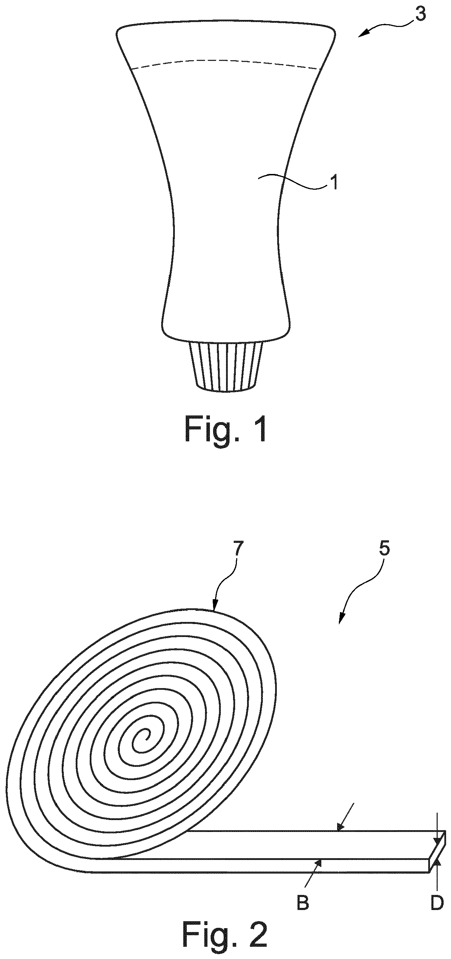

**Fig. 1** zeigt eine schematische Darstellung einer Darreichungsform eines Ausführungsbeispiels einer Lötpaste 1. Die Lötpaste 1 ist hier beispielhaft in einer Tube 3 angeordnet. Die Lötpaste 1 weist eine erfindungsgemäße Lotlegierung oder eine Lotlegierung nach einem oder mehreren der zuvor beschriebenen Ausführungsbeispiele auf. Die Lötpaste weist bevorzugt zusätzlich zu der Lotlegierung ein Flussmittel, insbesondere Hartlotflussmittel, oder einen Binder auf.

**Fig. 2** zeigt eine schematische Darstellung einer Darreichungsform eines Ausführungsbeispiels einer Lötfolie 5. Die Lötfolie 5 ist bevorzugt als dünngewalzte Folie ausgebildet und hier beispielhaft zu einer Rolle oder Spule 7 aufgerollt. Die Lötfolie 5 weist eine erfindungsgemäße Lotlegierung oder eine Lotlegierung nach einem oder mehreren der zuvor beschriebenen Ausführungsbeispiele auf. Insbesondere besteht die Lötfolie 5 aus einer solchen Lotlegierung. In bevorzugter Ausgestaltung weist die Lötfolie 5 eine Dicke D von mindestens 0,1 mm bis höchstens 0,3 mm, vorzugsweise 0,2 mm auf. Alternativ oder zusätzlich weist die Lötfolie 5 bevorzugt eine Breite B von mindestens 0,5 cm bis höchstens 15 cm, vorzugsweise von mindestens 1 cm bis höchstens 10 cm, vorzugsweise von mindestens 2 cm bis höchstens 8 cm, vorzugsweise von mindestens 4 cm bis höchstens 6 cm, vorzugsweise 5 cm, auf.

Die Erfindung umfasst insbesondere auch die folgenden Aspekte:
1. Lotlegierung, umfassend
   - einen Massenanteil von mindestens 35 % bis höchstens 62 % an Silber,
   - einen Massenanteil von mindestens 10 % bis höchstens 30 % an Kupfer,
   - einen Massenanteil von mindestens 10 % bis höchstens 26 % an Zink, wobei
   - die restlichen Massenanteile auf 100 % bis auf unvermeidbare Verunreinigungen mindestens ein Element aufweisen, das ausgewählt ist aus einer Gruppe, bestehend aus Zinn, Gallium, Mangan, Nickel, und Indium.
2. Lotlegierung nach Aspekt 1, wobei
   - der Massenanteil an Silber von mindestens 40 % bis höchstens 60 %, und
   - der Massenanteil an Kupfer von mindestens 13 % bis höchstens 22 % beträgt.
3. Lotlegierung nach einem der vorhergehenden Aspekte, mit einem Massenanteil von mindestens 4 % bis höchstens 17 % an Zinn.
4. Lotlegierung nach einem der vorhergehenden Aspekte, mit einem Massenanteil von mindestens 0,1 % bis höchstens 16 % an Indium, wobei vorzugsweise der Massenanteil an Indium
   - von mindestens 2,3 % bis höchstens 14 %, vorzugsweise von mindestens 3 % bis höchstens 12 %, vorzugsweise von mindestens 3,3 % bis höchstens 4,5 %, oder
   - von mindestens 6 % bis höchstens 16 %, vorzugsweise von mindestens 9 % bis höchstens 12 %, vorzugsweise von mindestens 9,7 % bis höchstens 10,5 %
   beträgt.
5. Lotlegierung nach Aspekt 1, mit einem Massenanteil von mindestens 4 % bis höchstens 17 %, vorzugsweise von mindestens 9 % bis höchstens 13,7 % an Zinn, wobei der Massenanteil an Zinn vorzugsweise von mindestens 10 % bis höchstens 13 %, vorzugsweise von mindestens 11 % bis höchstens 12,5 %, vorzugsweise von mindestens 11,5 % bis höchstens 12 %, vorzugsweise 11,7 % beträgt.
6. Lotlegierung nach Aspekt 1, wobei der Massenanteil an Kupfer von mindestens 13 % bis höchstens 19 %, vorzugsweise von mindestens 17 % bis höchstens 18,5 % beträgt, und wobei die Lotlegierung einen Massenanteil an Zinn von mindestens 7 % bis höchstens 15 %, vorzugsweise von mindestens 9 % bis höchstens 13 % aufweist.
7. Lotlegierung nach Aspekt 1, mit einem Massenanteil von mindestens 5 % bis höchstens 12 %, vorzugsweise von mindestens 5,5 % bis höchstens 8 %, vorzugsweise von mindestens 6 % bis höchstens 7 %, vorzugsweise von mindestens 6,3 % bis höchstens 6,7 % an Zinn, und einem Massenanteil von mindestens 2 % bis höchstens 9 %, vorzugsweise von mindestens 2,5 % bis höchstens 6 %, vorzugsweise von mindestens 3 % bis höchstens 5 %, vorzugsweise von mindestens 3,5 % bis höchstens 4,5 % an Indium.
8. Lotlegierung nach Aspekt 1, wobei der Massenanteil an Zink kleiner ist als 19 %, vorzugsweise kleiner als 15 %, und mit einem Massenanteil an Zinn, der größer ist als 5 %, vorzugsweise größer als 6 %, und bis höchstens 12 %, vorzugsweise bis höchstens 7 % beträgt, und mit einem Massenanteil von mindestens 2,3 % bis höchstens 9 %, vorzugsweise von mindestens 3 % bis höchstens 4,5 % an Indium.
9. Lotlegierung nach Aspekt 1, mit einem Massenanteil von mindestens 6 % bis höchstens 16 %, vorzugsweise von mindestens 9 % bis höchstens 11 %, vorzugsweise von mindestens 9,7 % bis höchstens 10,7 %, vorzugsweise von mindestens 10 % bis höchstens 10,5 %, an Indium.
10. Lotlegierung nach Aspekt 9, mit einem Massenanteil von mindestens 0,1 % bis höchstens 10 %, vorzugsweise von mindestens 2 % bis höchstens 6 %, vorzugsweise von mindestens 3 % bis höchstens 5 %, vorzugsweise von mindestens 3,5 % bis höchstens 4,5 %, an Mangan.
11. Lotlegierung nach einem der Aspekte 9 oder 10, mit einem Massenanteil von mindestens 0,1 % bis höchstens 9 %, vorzugsweise von mindestens 3 % bis höchstens 5 %, vorzugsweise von mindestens 3,7 % bis höchstens 4,7 %, vorzugsweise von mindestens 4,0 % bis höchstens 4,5 %, vorzugsweise von mindestens 4,3 % bis höchstens 4,5 %, an Nickel.
12. Lotlegierung nach Aspekt 1, mit einem Massenanteil an Mangan, der größer ist als 3 % und höchstens 5 % beträgt, und mit einem Massenanteil an Indium, der größer ist als 7 % und höchstens 13 % beträgt, und mit einem Massenanteil von mindestens 3,5 % bis höchstens 5,5 % an Nickel.
13. Lötpaste, mit einer Lotlegierung nach einem der Aspekte 1 bis 12.
14. Lötfolie, mit einer Lotlegierung nach einem der Aspekte 1 bis 12.

## Patentansprüche

1. Lotlegierung bestehend aus
- mindestens 54,3 % bis höchstens 58,3 % Silber,
- mindestens 16,3 % bis höchstens 20,3 % Kupfer,
- mindestens 12,5 % bis höchstens 16,5 % Zink,
- mindestens 4,3 % bis höchstens 8,3 % Zinn,
- mindestens 2 % bis höchstens 6 % Indium, jeweils in Massenanteilen, und
- restlichen Massenanteilen bis 100 % unvermeidbarer Verunreinigungen.

2. Lotlegierung nach Anspruch 1, bestehend aus
- mindestens 55,3 % bis höchstens 57,3 % Silber,
- mindestens 17,3 % bis höchstens 19,3 % Kupfer,
- mindestens 13,5 % bis höchstens 15,5 % Zink,
- mindestens 5,3 % bis höchstens 7,3 % Zinn,
- mindestens 3 % bis höchstens 5 % Indium, jeweils in Massenanteilen, und
- restlichen Massenanteilen bis 100 % unvermeidbarer Verunreinigungen.

3. Lotlegierung nach Anspruch 1 oder 2, bestehend aus
- 56,3 % Silber,
- 18,2 % Kupfer,
- 14,6 % Zink,
- 6,4 % Zinn,
- 4,1 % Indium, jeweils in Massenanteilen, und
- restlichen Massenanteilen bis 100 % unvermeidbarer Verunreinigungen.

4. Lötpaste, mit einer Lotlegierung nach einem der Ansprüche 1 bis 3.

5. Lötfolie, mit einer Lotlegierung nach einem der Ansprüche 1 bis 3.
